# EUROPEAN PATENT APPLICATION

(11) **EP 4 096 069 A1**
(43) Date of publication of application: **30.11.2022**
(21) Application number: 22172173.1
(22) Date of filing: 06.05.2022
(51) Int. Cl.: H02K 7/18

(54) **AIRCRAFT TURBO-ALTERNATOR**

(30) Priority: 28.05.2021 PL 43803421
(71) Applicant: Politechnika Rzeszowska im. Ignacego Lukasiewicza, 35-959 Rzeszów (PL)
(72) Inventor: Kuzniar, Michal, 37-100 Lancut (PL); Bednarz, Arkadiusz, 36-047 Niechobrz (PL)
(74) Representative: Wroblewski, Marcin Jan

(57) **Abstract**

An aircraft turbo-alternator comprises an electric motor rotor and a turbine engine stator, which is used as the stator for an electric motor. The stator is the axial compressor housing, which is connected to the air inlet guide rail (1) with vanes (2) to which the inner band (3) and the outer band (4) are connected. The rotor is the drive shaft (5) of the axial compressor or the rotor of the axial compressor or the drum (9) of the axial compressor. Permanent magnets (7) are mounted on the rotor and induction coils (8) are fixed on the stator to induce the electromotive force.

## Description

The subject matter of the invention is an aircraft turbo-alternator

The starter systems and current generators known and used nowadays operate as separate assemblies, being driven either from the main engine shaft via output shafts or they receive their drive from a propeller gearbox.

The turbo-alternators, used in Formula 1 racing cars, are well-known solutions, presented in the publication by Stepień Z., entitled: "A new generation of F1 race engines - hybrid power units", Combustion Engines, 2016, 167(4), 22-37. These well-known turbo-alternators, components of the electrical system, sit on the compressor-turbine shaft.

From invention application description PL424586B1, there is known a hybrid propulsion system for a helicopter, comprising two independent propulsion systems, each of them comprising at least one hybrid motor and at least one electric motor to drive a helicopter rotor. This known helicopter hybrid propulsion system is provided with two independent power units and has a backup power source, ensured by a battery bank, connected via a control-regulation system and inverters to the AC electric motors. It consists of two independent power units comprising at least one turbine engine driving directly at least one alternating current generator which, via a rectifier, transmits generated electric current via the supply cables to the inverters controlled by a control and regulation device, connected to the AC motors driving the main rotor. The reserve energy source consists of battery banks, connected via the control-regulation system and the inverters to the AC electric motors.

From patent description PL233584B1, there is known an aircraft propulsion system, consisting of two independent propulsion units comprising at least one turbine engine for direct propulsion and at least one alternating current generator which, via rectifiers, transmits the generated electrical current via supply cables to inverters, controlled by a control-regulation device, connected to the two AC motors, which drive fixed-pitch propellers, operating in counter-rotating configuration.

From invention application description US2018009542A1, there is known a helicopter, comprising a hybrid engine system with an internal combustion engine and an electric motor. These motors are connected with the rotor system and configured for separate or collective operation of the rotor system.

From the application description of invention US5828137A, there is known a turbo-alternator for a hybrid motor vehicle, the turbo-alternator comprising a low speed part, having a low speed axial shaft and an integrated engine rotor for electricity generation, a high speed part, having a high speed axial shaft and an integrated engine rotor for electricity generation. The shaft is essentially parallel to the low-speed axial shaft.

From the application description of invention US2008246281A1, there is known a turbo-alternator, adapted to convert energy, accumulated in the process gas, into electrical energy, facilitating energy recovery during operation. This well-known turbo-alternator contains a turbine and a generating device, integrated operationally with each other by means of a rotating shaft that can rotate at high speeds. The rotating shaft is supported by foil gas bearings.

The goal of the invention is to develop a new aeronautical turbo-alternator, which will enable a combination of a starter system and a power generation system with the rotor system of an aeronautical turbine engine for airframe applications, thereby reducing the weight of the structure and simplifying the engine control system.

An aircraft turbo-alternator, according to the invention, is characterised in that it comprises an electric motor rotor and a turbine engine stator, which is used as a stator for the electric motor, the stator being an axial compressor housing, which is connected with an air inlet guide rail with vanes to which the inner band and the outer band are connected, while the rotor is either the axial compressor drive shaft or axial compressor rotor or axial compressor drum; in addition, permanent magnets are mounted on the rotor, and induction coils are mounted on the stator for electromotive force induction.

Preferably, in at least two vanes of the inlet guide rail there are channels for the wiring of the induction coils, and the induction coils on the stator are either located on the inner band of the inlet guide rail of the axial compressor or on the flange of the inlet guide rail of the axial compressor or on the compressor housing.

The new aircraft turbo-alternator, according to the invention, makes it possible to reduce the weight of the structure thanks to the integration of the starting system with the power generation system. By placing of the permanent magnets on the rotor of the electric motor and of the induction coils on the stator of the turbine engine acting as the stator of the electric motor during the initial starting stage of the engine, the system works as a starter, while during the start-up of the engine to a minimum rotational speed, the electrical unit helps achieve the optimum rotational parameters of the electric motor rotor required to reach the idling range of the engine. Such use of electric energy to drive the rotor assembly enables to minimise the number of the motor auxiliary systems. The use of this new aircraft turbo-alternator allows for increased efficiency of the electric energy generation process, which can be used to supply electric auxiliary drive units. This reduces the aircraft fuel consumption during flight, thus lowering the emissions of harmful compounds, contained in exhaust gases into the atmosphere and improving economic indicators. With the application of an aircraft turbo-alternator, the motor structure becomes more compact, as the rotor of the electric motor is integrated with the shaft of either the rotor or the drum of the axial compressor, while the stator of the turbine engine, especially the bandage of the steering apparatus or the outer casing of the compressor, is used as the stator of the electric motor.

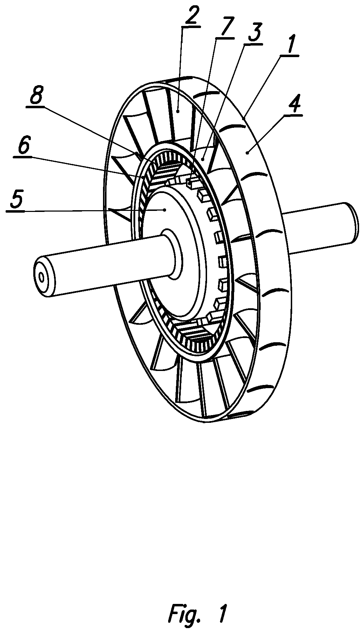

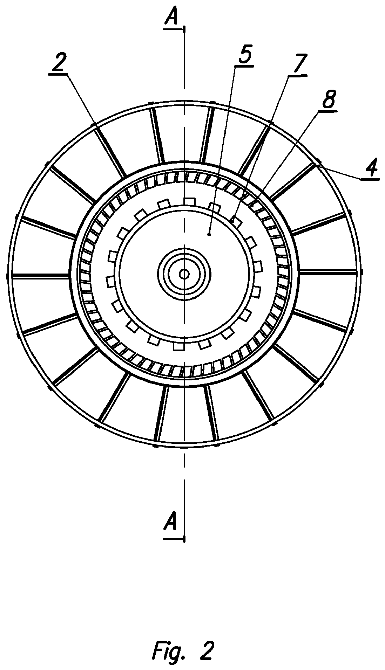

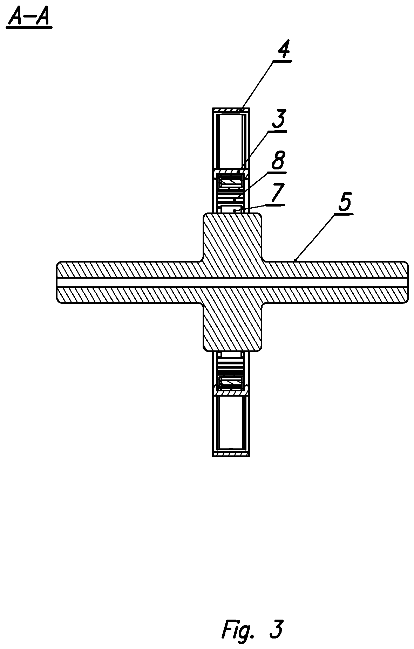

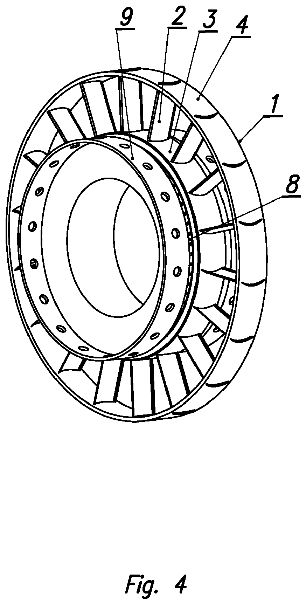

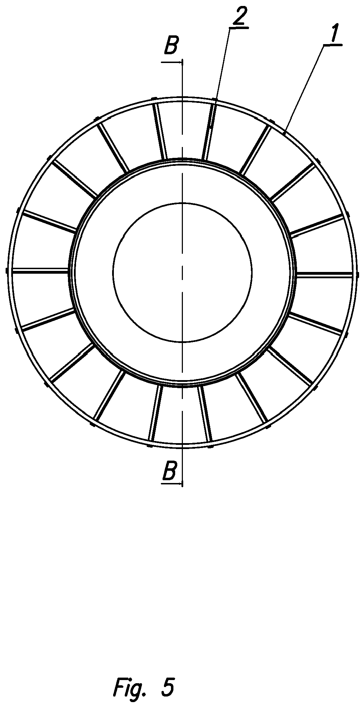

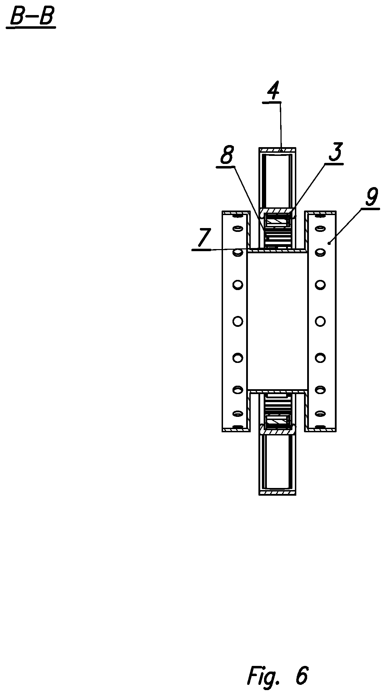

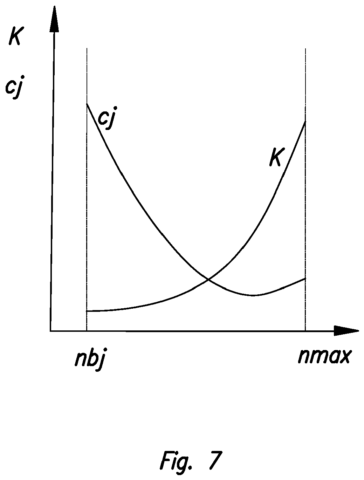

The subject of the invention is explained in more detail in the implementation examples in figures, where fig. 1 shows the aircraft turbo-alternator in the first variant of execution in the isometric view from the front, top and left side, fig. 2 - the same aircraft turbo-alternator in the front view, fig. 3 - the same aircraft turbo-alternator in A-A cross-section, shown in fig. 2, fig. 4 - the aircraft turbo-alternator in the second variant of execution in the isometric front view, top view and left side view, fig. 5 - the same aircraft turbo-alternator in the front view, fig. 6 - the same aircraft turbo-alternator in B-B cross-section, shown in fig. 5, while fig. 7 - a diagram showing the rotational characteristics of the turbine engine.

In the first example of implementation, the aircraft turbo-alternator, according to the invention, comprises the rotor of an electric motor and a turbine engine stator which is used as the stator of the electric motor. The stator is an axial compressor with an air inlet guide rail 1 containing vanes 2 and an inner band 3 and an outer band 4 attached to the vanes. Whereas the rotor is the drive shaft 5 of the axial compressor. The air inlet guide rail 1 for the compressor is an integral part of the flow motor and provides the housing of the drive shaft support 5. On this drive shaft 5 of the axial compressor, permanent magnets 7 are mounted, and on the flange 6 of the air inlet guide rail 1 of the axial compressor, inductive coils 8 are fixed at a distance, measured radially, from the permanent magnets 7. In vanes 2 of the air inlet guide rail 1 to the axial compressor, electric current wires are attached which make the wiring of the induction coils 8.

In the initial starting stage of the motor, the system of permanent magnets 7 and induction coils 8 works as the starter. When starting the motor to its minimum speed, the electrical unit helps achieve the optimum rotational performance of the rotor of the electric motor. Such use of electric energy to drive the rotor assembly, minimises the number of motor auxiliary systems. In steady-state operation, the turbo-alternator assembly produces electricity for airframe and motor needs. Steady state operation is the engine operating range, guaranteeing safe level flight and thus the lowest specific fuel consumption, as shown in the engine rotational characteristics in fig. 7, where:
K-engine thrust, N
cj - specific fuel consumption, kgpal/(N^{∗}s)
nbj - idle rotational speed, RPM
nmax - max rotational speed, RPM

The electrical energy surplus can be stored in batteries as electrical energy that can be used for subsequent start-up, to drive an additional electric motor or to eliminate the low-pressure turbine driving the external duct fan - the role of this turbine is taken over by an electric motor. The electric energy, generated in real time, can be used to drive the electric motors of the distributed system.

In the second example of implementation, the aircraft turbo-alternator, according to the invention, comprises the rotor of an electric motor and a turbine engine stator which is used as the stator of the electric motor. The stator is an axial compressor with an air inlet guide rail 1 containing vanes 2 and an inner band 3 and an outer band 4 attached to the vanes. On the surface of the inner band 3 of this air inlet guide rail 1, induction coils 8 are fixed, in which the electric current is generated. The obtained electrical energy is received by the wires, which are routed through the ducts in vanes 2 of the air inlet guide rail 1. Permanent magnets 7 are fixed on the rotor, which is the drum 9 of the compressor, at a distance - air gap - from the induction coils 8. The size of the air gap depends on the diameter of the compressor drum 9, the rotational speed of the rotor of the electric motor rotor and on the type of winding.

The arrangement of inductive coils 8 and permanent magnets 7 may either be extended to the other stages of the compressor or limited to its inlet stage only. In case of low-power motors of up to 400 kW, it is possible to brake (decelerate the speed of) the rotor of the axial compressor by means of electromotive force - SEM - and thus to ensure motor speed control.

### List of references

- 1 -: inlet guide rail
- 2 -: vane
- 3 -: inner band
- 4 -: outer band
- 5 -: drive shaft
- 6 -: flange
- 7 -: permanent magnet
- 8 -: inductive coil
- 9 -: drum

## Claims

1. An aircraft turbo-alternator, **characterised in that** it comprises an electric motor rotor and a turbine engine stator which is used as the stator for an electric motor, the stator being an axial compressor housing which is connected to an air inlet guide rail (1) with vanes (2) to which the inner band (3) and the outer band (4) are connected, while the rotor is the drive shaft (5) of the axial compressor or the rotor of the axial compressor or the drum (9) of the axial compressor and, furthermore, permanent magnets (7) are mounted on the rotor, while induction coils (8) for induction of the electromotive force are mounted on the stator

2. The aircraft turbo-alternator according to Claim 1, **characterised in that** in at least two vanes (2) of the inlet guide rail (1) there are channels for wiring of the induction coils (8).

3. The aircraft turbo-alternator according to Claim 1 or 2, **characterised in that** the induction coils (8) on the stator are placed on the inner band (3) of the air inlet guide rail (1) to the axial compressor.

4. The aircraft turbo-alternator according to Claim 1 or 2, **characterised in that** the induction coils (8) on the stator are fixed on the flange (6) of the air inlet guide rail (1) to the axial compressor.

5. The aircraft turbo-alternator according to Claim 1 or 2, **characterised in that** the induction coils (8) on the stator are fixed on the compressor housing.
